# EUROPEAN PATENT SPECIFICATION

(11) **EP 0 844 814 B1**
(45) Date of publication and mention of the grant of the patent: **25.07.2001**
(21) Application number: 97924388.8
(22) Date of filing: 04.06.1997
(51) Int. Cl.: A01D 78/10, A01B 73/02

(54) **A HAY-MAKING MACHINE**
HEUWERBUNGSMASCHINE
MACHINE POUR LA FENAISON

(30) Priority: 07.06.1996 NL 1003292
(43) Date of publication of application: 03.06.1998
(60) Divisional application: 01200139.2
(73) Proprietor: MAASLAND N.V., 3155 PD Maasland (NL)
(72) Inventor: STAAL, Nanno, Geert, NL-3155 NH Maasland (NL); KOORN, Maarten, NL-3123 CP Schiedam (NL); VAN DEN ENGEL, Alfonsus, Jacobus, NL-3137 KC Vlaardingen (NL)
(74) Representative: Corten, Maurice Jean F.M.
(86) International application number: PCT/NL97/00314
(87) International publication number: WO 97/46076

(56) References cited:
- EP-A- 0 165 638
- EP-A- 0 296 666
- EP-A- 0 385 899
- EP-A- 0 391 093
- AU-B- 548 275
- DE-B- 1 235 057
- DE-U- 9 010 179
- FR-A- 2 627 050
- GB-A- 1 567 939
- NL-A- 9 400 133
- US-A- 4 178 998
- US-A- 4 512 416
- US-A- 4 615 397

## Description

The invention relates to a hay-making machine according to the preamble of claim 1.

Such a machine is known from DE-B-1235057, which discloses a hay-making machine with working members in three transverse groups arranged at a common frame. The machine is adjustable into a transport position wherein a working member of an outer group is pivotable in height about a shaft extending in the direction of travel.

The invention aims at providing a hay-making machine having a large working width and an uncomplicated construction, the outer groups of working members of said machine being adapted to be adjusted into the transport position in a simple manner. In accordance with the invention this is achieved in that of said three groups the outer one comprise more than three members, and in that, viewed in the direction of travel, the whole group is pivotable in forward direction about a vertical shaft in such a manner that the width of the machine is reduced.

It is known per se from EP-A-0385899 that outer groups of working members comprise more than three working members.

This construction has the advantage that the three groups of working members are adapted to be mounted on one frame which is capable of being drawn by a tractor.

It is noticed that it is known to pivot groups of working members about upwardly orientated shafts, but that in this case the working members, viewed in the direction of travel of the machine, are not pivoted in forward but in rearward direction, which has proved to be undesirable during transport. An embodiment of such a construction is described in the European patent EP-B-0053570 and in DE-B-1235057.

In accordance with a favourable embodiment of the invention, the pivotable working members of the two outer groups of working members, which working members are located on the outside, are pivotable about two pivot shafts which, in the operative position of the machine, extend at least substantially in the direction of travel, so that said working members are located, in the transport position, above the other working members of the group.

According to a further embodiment of the invention, both the outer group and the group located in the middle comprise a corresponding unit of three working members of which the outer working member is pivotable in upward direction. Said construction has the advantage that the correspondding groups of working members can be manufactured as units.

The invention will be explained in further detail on the basis of two embodiments.
Figure 1 is a schematic plan view of a first embodiment of the hay-making machine in accordance with the invention;
Figure 2 shows a rear view of the machine;
Figure 3 shows a side view according to the arrow III in Figure 1;
Figure 4 is a side view in which a supporting part of the machine is shown in detail;
Figure 5 represents, in a schematic plan view, the operative position of an alternative embodiment of the machine according to the invention;
Figure 6 is a view taken on the line VI-VI in Figure 5;
Figure 7 is a side view of the machine according to the line VII-VII in Figure 6;
Figure 8 is a view taken on the line VIII-VIII in Figure 6;
Figure 9 represents, in a schematic plan view, the transport position of the machine according to the alternative embodiment;
Figure 10 is a view according to the arrow X in Figure 9;
Figure 11 shows a detail of Figure 2, and
Figure 12 shows the detail of Figure 11 in the position of Figure 3.

The hay-making machine in accordance with the invention includes a frame 1 consisting of a frame beam 2 extending in the direction of travel A of the machine, which frame beam 2 is adjoined by a frame beam 3 extending transversely to the direction of travel. The frame beam 3 comprises a gearbox 4 including two sidepieces 5 and 6.

To the frame beam 3 there is fastened a trestle 7. The trestle 7 is provided with legs 8 and 9 extending obliquely downwards such that, seen from behind, the trestle has the form of an inverted V. Together with the frame beam 3, the trestle 7 is coupled to the frame beam 2 by means of a hinge pin 10 extending at least substantially horizontally transversely to the direction of travel.

The upper side of the trestle 7 is coupled to a hinge point 12 on the frame beam 2 by means of an adjusting element 11, in this case constituted by a hydraulic adjusting cylinder, by means of which the trestle 7 is capable of pivoting about the hinge pin 10.

At the rear side of the machine there is located a rearward and central group 22 of four working members 14 which, in practice, are also designated as raking members or rotors. These working members are rotatable about upwardly orientated rotation shafts and are located on a line transversely to the direction of travel A. For the purpose of carrying the working members 14, the central group 22 includes a frame beam 15 on which there are disposed two working members 14, while the outer working members 14 are disposed on frame portions 16 and 17 capable of pivoting about shafts 18, 19 extending in the direction of travel A. To that end the group of working members 14 comprises a horizontal hydraulic cylinder 20 engaging arms 21 of the frame portions 16 and 17.

The frame beam 15 comprises a gearbox 23 which is coupled with the outgoing shaft of the gearbox 4 by means of an intermediate shaft 24. On the frame beam 15 of the central group 22 there is provided a trestle 25. Said trestle 25 is coupled with the trestle 7 by means of pivot arms 26. Between the trestle 7 and the trestle 25 there is disposed a hydraulic cylinder 27 by means of which the trestle 25 can be adjusted in height relative to the trestle 7; this upward movement is partly due to the fact that pivot arms 26, i.e. one centrally located upper pivot arm and two lower pivot arms 26 each positioned at the side thereof, located between the trestle 7 and the trestle 25, form, in side view, a pivotable parallelogram. The drive of the working members 14 takes place in a manner known per se by means of a drive shaft which is located in the frame beam 15 and the frame portions 16 and 17 and which extends towards the gearboxes having a square transmission of all the working members 14.

The outer groups of working members 28 each consist of four working members 29 and 30, subdivided into pairs of inner working members 29 and pairs of outer working members 30 and corresponding to the working members 14 of the central group 22. The inner working members 29 are carried by a common frame beam portion 31 and the outer working members 30 are carried by a frame beam portion 32. Both frame beam portions are coupled with each other in a hinged manner by means of an intermediate beam portion 33. The frame beam portion 31 is coupled in a hinged manner with the frame beam 3 via a hinge connection 34. Said hinge connection 34 comprises a vertical hinge and a horizontal hinge. The frame beams 31 and 32 are engaged by a hydraulic cylinder 35, by means of which the frame beam 32 can be pivoted relative to the frame beam 31 in such a manner that it is possible for the frame beam 32 to be located approximately parallel to and above the frame beam 31. Moreover, the frame beam 31 is coupled with the frame beam 2 by means of adjustable drawbars 36 and via the central adjusting element 13. By energizing the hydraulic cylinder 13, it will be possible to pivot the frame beam 31 and consequently the group of rake wheels 29, 30 so that, by pivoting about the vertical shaft of the hinge 34, they will be positioned at least approximately parallel to the direction of travel beside the frame beam 2. This applies both for the left and the right group of working members 28.

In the operative position, the groups of working members 28 are arranged in such a manner that the working members 30, which are located closest to the frame beam 2, are overlapping the outer working members 14 of the central group 22 in the direction of travel, which overlap approximately corresponds to that of the working members within each of the groups 22 and 28. Seen in the direction of travel, either the tangent plane at the orbit of the tines of the outermost rake member is located closer to the frame beam 2 than the tangent plane at the orbit of the tines of the outermost rake member of the central group 22, or the respective tangent planes coincide.

Under the frame beam 3 there are located wheels 37 arranged in the direction of travel A at a mutual distance transversely to the direction of travel A, which wheels are capable of being adjusted in height by means of a hydraulic cylinder 38. The running wheels 37 are supported by arms 40 on which the running wheels are disposed so as to be freely rotatable about horizontal rotation shafts 41. The arms 40 are mounted on carriers 43 of the frame beam 3 so as to be freely pivotable about horizontal shafts 42.

At the rear side each of the arms 40 is pivotably coupled to a hydraulic cylinder 38 which is coupled at its upper side to the frame beam 3 in a hinged manner. At the height of the rotation shaft 41, each of the running wheels 37 is supported by a spring 45. For that purpose there are disposed journals against the frame portion 2 and on the arms 40, which journals centre the spring 45. During operation, the running wheels are capable of resiliently supporting the machine, to which end the hydraulic cylinder 38 is capable of being adjusted into an unloaded position. However, by means of the hydraulic cylinder 38, the machine can be lifted relative to the wheels 37 for the purpose of adjusting the machine into the transport position.

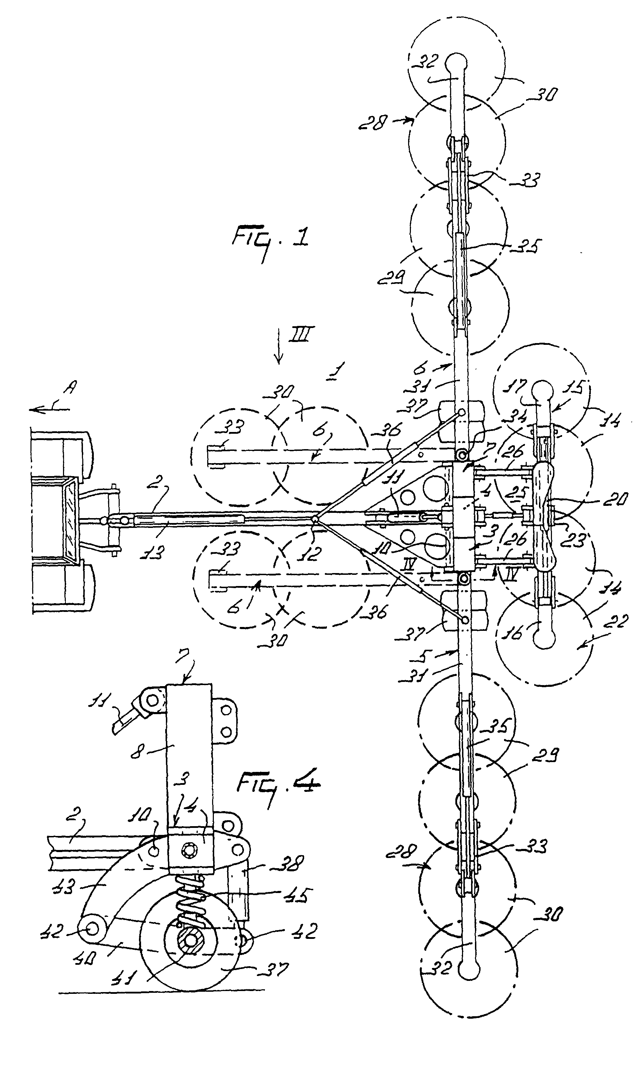

Under the working members 14, 29 and 30 there are located self-adjusting running wheels 39. The drive of the working members 14, 29, 30 extends in a manner known per se via drive shafts which extend through the frame beams on which the relevant working members are disposed. Above each working member there is located, in a manner known per se, a gearbox having a square transmission, by means of which the relevant working member 14, 29, 30 can be set rotating in such a manner that the working members are rotating in opposite directions and the outer working members of the groups of working members are rotating, at their front sides, towards the middle of the relevant group, as indicated by the arrows III in Figure 1. Centrally on the frame portion 2 there is provided a central gearbox 4 which is capable of being coupled via intermediate shafts to the power take-off shaft of a tractor and which comprises one or more square transmissions, i.e. outgoing journals, for the drive of the groups 22 and 28.

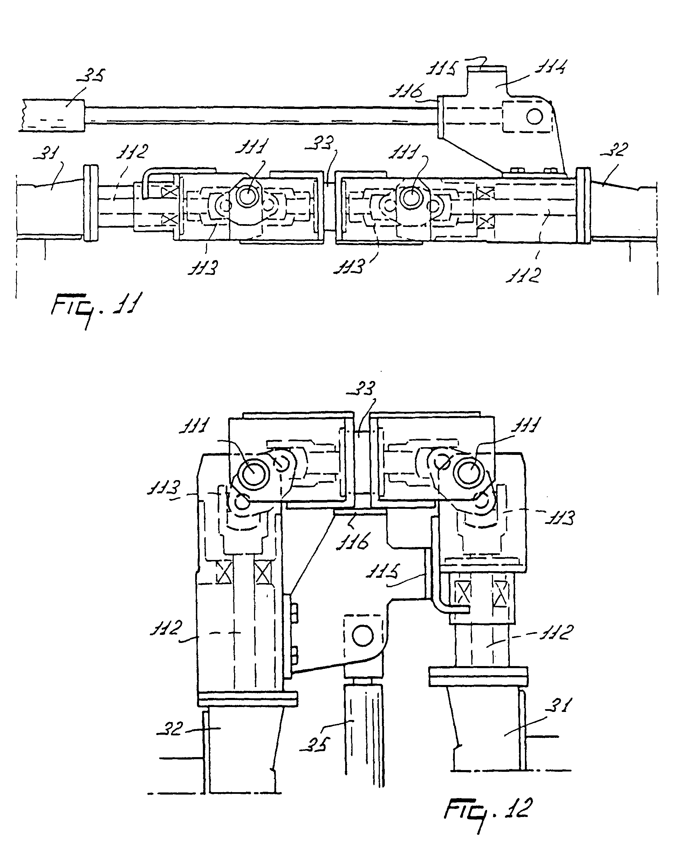

Near the various hinge connections between the frame beams, the drive shafts may comprise so-called wide-angle universal joints known per se which enable, upon pivoting of the working members as a result of unevennesses of the ground, the drive to be preserved, but which are switched off when the working members are pivoted into the transport position. An alternative for the wide-angle universal joints will be explained in what follows with reference to Figures 11 and 12.

The hydraulic cylinders of the machine are adapted to be operated in a manner known per se from the tractor that is drawing the machine.

The function of the implement will be explained in what follows:

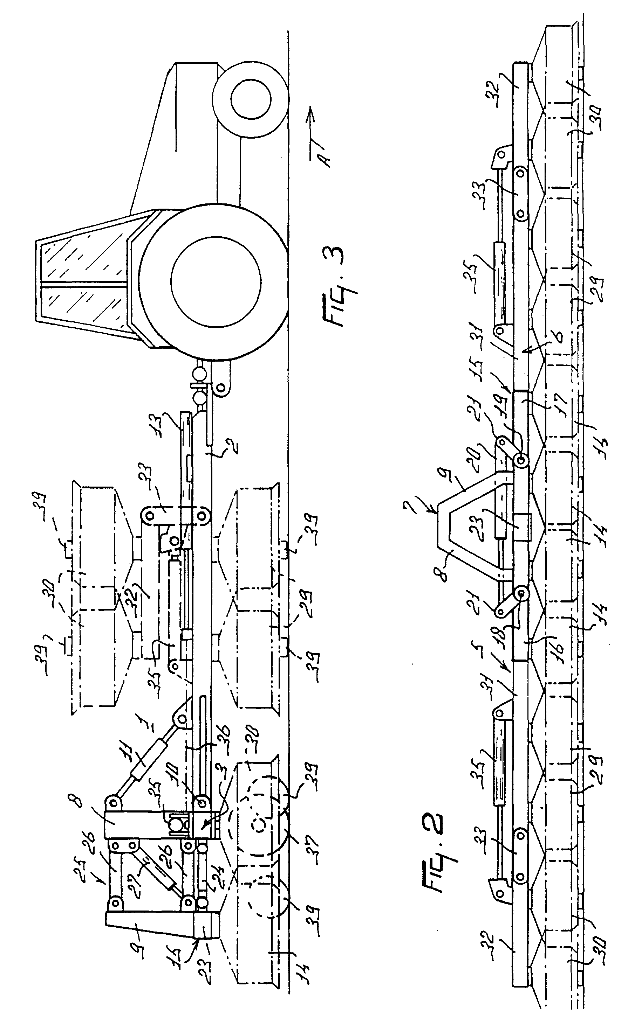

During operation the machine functions as a tedder and has in the present embodiment a working width of approximately 12.5 metres. By means of the running wheels 39 under the working members 14, 29, 30, the working members follow the unevennesses of the ground, while they are capable of pivoting about the various pivot shafts between the frame portions. When the machine has to be adjusted into a transport position, first the wheels 37 are adjusted in height in such a manner that the frame 1 will be positioned higher from the ground and, when the hydraulic cylinders 20 and 35 of the working member groups 22 and 28 have been locked, the working members of all groups are lifted from the ground as well. In view of the forwardly tilted position of the working members 14, 29, 30 during operation, it may be desirable to pivot the trestle 7 somewhat rearwards. Subsequently the outer working members of the group of working members 14 located in the middle are pivoted upwards so that said working members are located within the largest size of the inner working members of this group. Afterwards the outer working members 30 are pivoted in such a manner that they are located above the working members 29 (Figure 3), whereafter the outer groups of working members 28 are pivoted forwardly so that they are located beside the frame beam 2. In this manner the machine obtains a transport width of less than 3 metres and is moved forward during transport on the wheels 37. The present machine has inter alia the advantage that, by disposing the working members 29 and 30 in pairs on a frame beam portion 31, 32, there can be obtained a transport position in a relatively simple and advantageous manner, while the mutual cooperation of the pairs of working members 29 and 30 is preserved, while, partly due to the intermediate frame portions 33, there is maintained a proper adaptation to the ground.

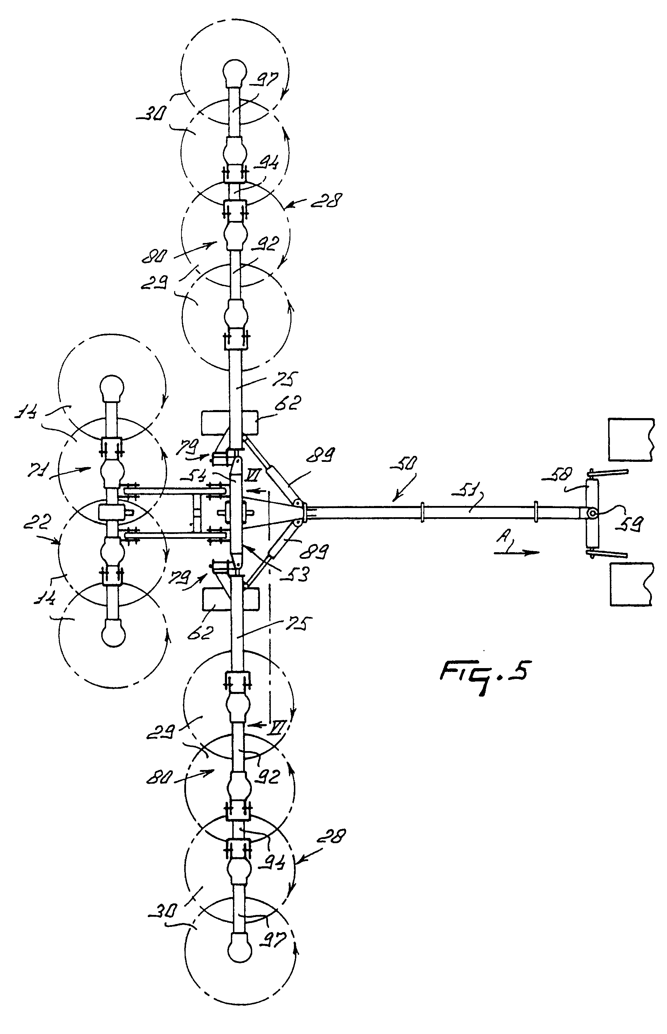

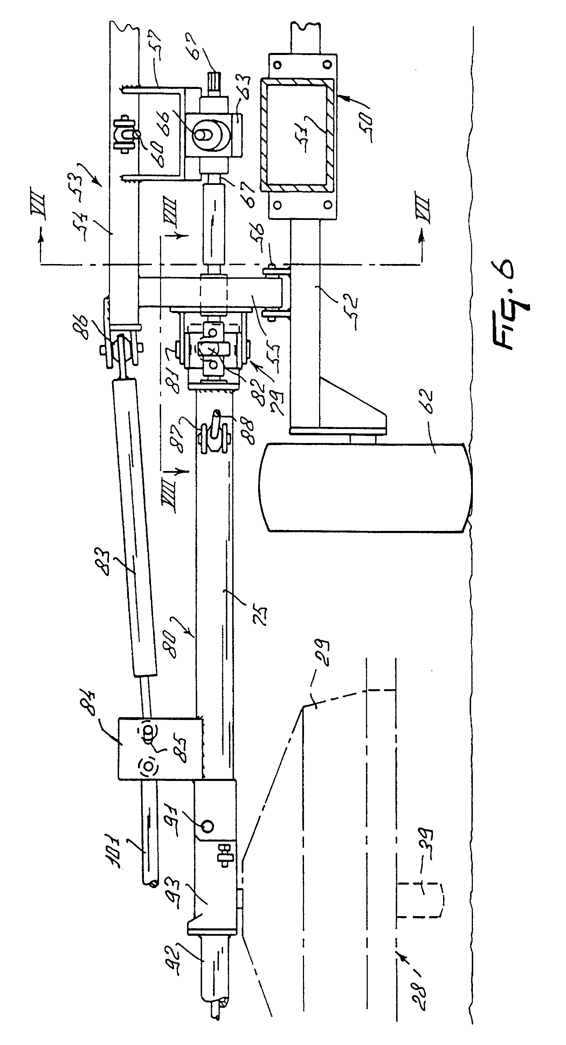

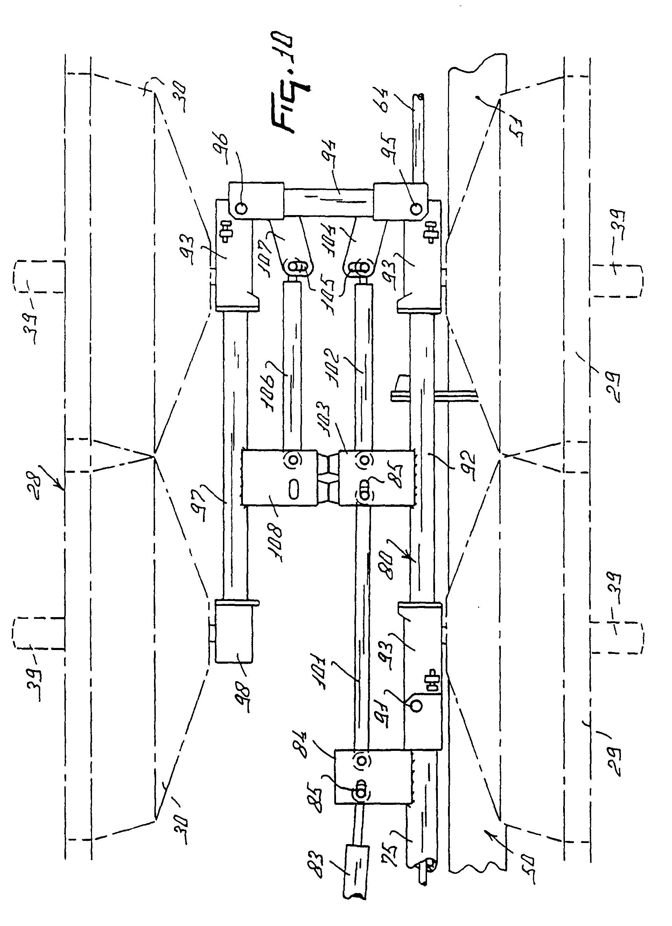

Figures 5 to 10 show an other embodiment of the invention. Parts of the hay-making machine in this embodiment corresponding to those of Figures 1 to 4 are indicated by the same reference numerals.

The machine includes a frame 50 provided with a frame beam 51 extending in the direction of travel of the machine, which frame beam is fastened to a frame beam 52 extending transversely to the direction of travel. On the frame beam 52 there is mounted a trestle 53. Said trestle 53 consists of a crossbeam 54 and two beams 55 extending upwardly which are disposed on the beam 52 about horizontal cross-shafts 56. At its front side the frame beam 51 is provided with a coupling element 57 which is extending in an obliquely downward direction. For the purpose of coupling the machine to a tractor, a coupling beam 58 is fastened to said coupling element 57 so as to be capable of hinging freely about a vertical shaft 59. The coupling beam 58 is provided with a coupling element, in the present embodiment constituted by journals disposed at the ends of the beam 58, by means of which journals the machine can be coupled to the lower arms of a three-point lifting hitch of the tractor.

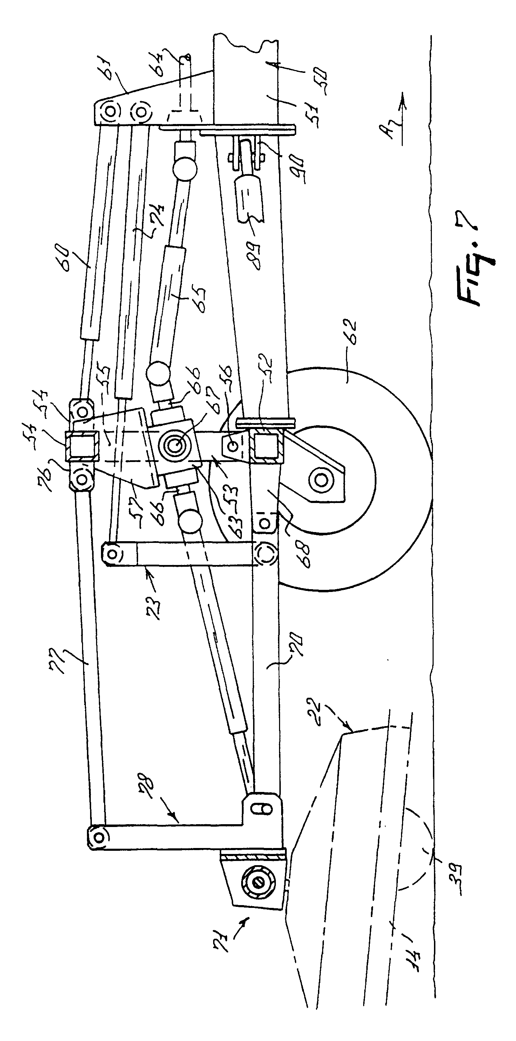

As shown in Figure 7, by means of a rod 60 which is adjustable in length, in this case constituted by a hydraulic cylinder, and via a support 61 disposed on the frame beam 51, the trestle 53 is coupled with the frame beam 51, so that the position of the trestle 53 relative to the frame beam 51 can be adjusted by a pivotal movement about the shafts 56. Although not shown in the figure, an adjusting rod 60 designed as a hydraulic cylinder comprises a stop which is adjustable relative to the cylinder portion, said stop defining the most forward position of the trestle 53 when the hydraulic cylinder has been adjusted completely. By means of this adjustable stop the forwardly tilted operative position of the working members 29, 30 is defined. For pivoting the machine into a transport position, the trestle 53, at least the shafts 81 coupled thereto, are adjusted into a vertical position.

The frame 50 is supported by two supporting wheels 62 which, in this embodiment, are immovably coupled with the frame beam 52 in the direction of travel, but which are capable of being steered, if desired, in a manner known per se, such as by means of steering swivel shafts. During operation, the supporting wheels 62 are each located at least approximately right under a frame beam 80 still to be described.

The trestle 53 is provided with a gearbox 63 disposed on the crossbeam 54, which gearbox 63 is capable of being coupled with an intermediate shaft 65 by means of an intermediate shaft 64 consisting of two parts, with the aid of which intermediate shaft 65 the gearbox 63 can be driven via the power take-off shaft of the tractor. Between the frame beam 54 and the gearbox 63 there is provided a console via which the gearbox 63 is arranged at the height of the horizontal pivot shaft 82. The gearbox is disposed in such a manner that, in the transport position, its outgoing journals 66 extending in the direction of travel are tilted upwardly in forward direction at an angle corresponding to the angle at which the working members 29, 30 are tilted forwardly.

The gearbox 63 includes a drive shaft 66 extending rearwardly and, on both sides, a drive shaft 67 extending sidewardly.

At the rear side of the frame beam 52 there are mounted connections 68, here in the form of pairs of lugs. To the connections there can be coupled a forwardly projecting arm 70 of a frame 71 of the group of working members 14 located in the middle. At the end of the arm 70 there are provided, adjacent thereto, coupling means for the coupling with the connections 68. The connections 68 extend rearwardly to such an extent that the horizontal pivot shaft, which couples a connection 68 with an arm 70, is located behind a corresponding horizontal pivot shaft in the upper connection 76. In this arrangement the arms 70 are produced as shorter ones than the arms 77. On one arm 70 or both arms 70 there is disposed, via a console, a common upper coupling point 73. Via a rod 74 capable of being adjusted in length, such as a hydraulic adjusting cylinder, said coupling point 73 can be coupled to the support 61 of the frame 50.

On the crossbeam 54 there are disposed two connections 76, here in the form of pairs of lugs, for coupling arms 77 which are connected in a hinged manner to a trestle 78 of the frame beam 15. The working members 14 are driven in a manner corresponding to that of the working members of the first embodiment and are pivoted upwardly by means of the adjusting element 74 for being brought into the transport position.

Lifting of the rearmost group 22 by adjusting the adjusting element 74, in particular for turning on the headland, has the effect that the working members 14 are brought simultaneously from a forwardly tilted position into a position in which the lower ends of the tines of a working member 14 will be located in an at least almost horizontal plane, i.e. a plane in which the rotation shafts are orientated vertically. This contributes to increasing the distance between the tines and the ground without a considerable increase of the transport height of the central group 14 and facilitates pivoting of the outer working members 14 into their transport position.

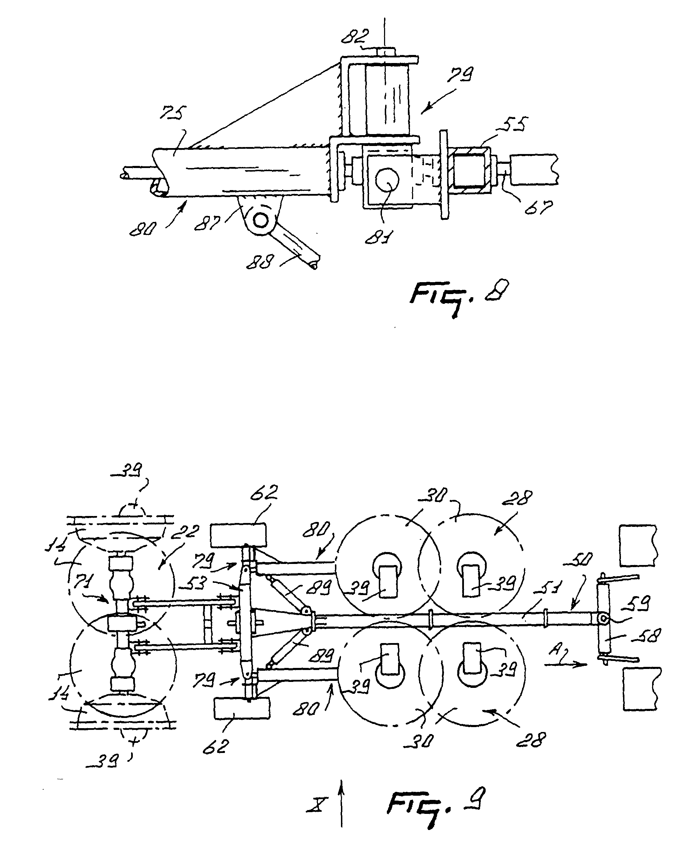

As shown more in detail in Figure 8, on the outsides of the upwardly extending beams 55, there are disposed connections 79 on which frame beams 80 are pivotably mounted about vertical shafts 81 and about horizontal shafts 82 for the groups of working members 28 located on the outside.

The horizontal shafts 82 extend in the direction of travel A, while the vertical shafts 81 intersect a line extending at least substantially perpendicularly to the direction of travel A. In accordance with the invention, both shafts may virtually be produced as interrupted ones or via a plural hinge point construction.

In the present embodiment, the shaft 81 is designed as an interrupted one constituting part of a forked element, so that the drive of the working members 29, 30 intersects the shaft 81. The drive shaft extending sidewardly, transversely to the direction of travel A, from the central gearbox 63 is passed through a loop-shaped opening in a trestle portion 53 and then extends in a straight line through the frame beam 80. Relative to the direction of travel A, the horizontal shaft 82 is disposed behind the vertical shaft 81. To that end, a frame beam 80, which is disposed in a straight line relative to the frame beam 54, is provided with a console. As a result of the fact that the gearbox 63 is coupled with the frame beam 54, the gearbox 63 pivots together with the frame beams and the working members into a forwardly tilted position. In the operative position, the shafts thereof which are orientated in the direction of travel extend substantially horizontally, which limits the wear of the universal joints known per se of the drive.

The frame beams 80 are coupled with the trestle 53 by means of hydraulic adjusting elements 83 at the height of the crossbeam 54 for automatically pivoting in height about the shaft 82. For that purpose, each of the frame beams 80 includes a projection 84 having a slot 85, in which the relevant end of the cylinder 83 is capable of moving. The hydraulic cylinders 83 are connected with the trestle 53 by means of a coupling which is moving in several directions, e.g. a ball-and-socket joint 86.

Each of the frame beams 80 furthermore comprises a fastening facility 87 to which an adjusting element, in this case the piston rod 88 of a hydraulic adjusting cylinder 89, meshes in a hinged manner. The adjusting element 89 meshes in a hinged manner to a fastening facility 90 of the frame beam 51. By means of the adjusting elements 89 the frame beams 80 are capable of pivoting forwardly in the direction of travel A relative to the central group of working members 14.

The frame beam 80 includes a frame beam 75 which is pivotable about the horizontal shaft 82, to which frame beam 75 there is fastened a pivotable frame beam 92 via the horizontal shaft 91. Via the adjusting element 83 the frame beam 75 is also connected with the trestle 53. For that purpose there is provided an upwardly extending arm or console 84 at the upper side of the frame beam 75. The console 84 is made of a piece of plate material bent into a U-shape. The edges of the free ends of the U-shape are welded against the frame beam 75. At approximately the same height, the console is provided with a slotted hole extending substantially horizontally, indicated by the reference numeral 85, and a borehole, serving in this case for fittingly including a shaft extending in the direction of travel A, by means of which shaft a rod 101 is pivotably coupled with the console 84. The shaft 91, and together therewith the end of the frame beam 75, extends transversely to the direction of travel A beyond the largest outline of the relevant outer working member 14 of the central group 22. On said frame beams 92, under two gearboxes 93 included in the relevant frame beam 92 near the ends thereof, there are disposed two working members 29 per frame beam 92. At the free ends of the frame beams 92, two intermediate arms 94 are pivotably mounted about horizontal shafts 95. At the outer end of an intermediate beam 94 a frame beam 97 is coupled about a horizontal shaft 96. In an analogous manner, working members 30 are mounted on the frame beams 97 via gearboxes 93.

The pivotal movement of the trestle 53 about the shafts 56 has the effect that the working members 14 of the group 22, together with the working members of the lateral groups 28, are brought into and out of a forwardly tilted position: the pivot shafts 56, the pivot shafts at the ends of the arm 77 and the pivot shaft at the rear ends of the arms 70 form a parallelogram construction.

The adjusting elements 74 and 83 are mutually coupled so that, in one single control operation, all three groups of working members can be adjusted into a position in which they are lifted from the ground, e.g. upon turning on the headland. For a further pivotal movement into the transport position, in accordance with the preferred embodiment, the trestle 53 has to be adjusted into a vertically orientated position, in the embodiment shown by withdrawing the adjusting element 60.

Each intermediate arm 94 is capable of being adjusted by means of a preferably hydraulically produced adjusting element 102, which is coupled in a hinged manner with the console 103 and the arm 104 of the frame beam 80 and the intermediate beam 94 respectively. The arm 104 is provided with a slot 105 which extends preferably substantially in the longitudinal direction of the intermediate beam 94.

In an analogous manner, each intermediate arm 94 is coupled with the console 108 of the intermediate arms 94 and the frame beams 97 respectively by means of a hydraulic cylinder 106 and arms 107. Under each of the working members 29, 30 there is located a running wheel 37, as also described in the previous embodiment. The console 103 is identical to a console 84 whose horizontal upper surface is provided with a few rubber knobs. The console 108 corresponds to the console 103, but is disposed in an inverted manner, i.e. having in the operative position the slotted hole on the outside and the borehole on the inside.

In the transport position, the frame beam 97 bears on the frame beam 92 via the consoles 107 and 103. A connecting rod 102 is pivotably connected with the console 84 about a horizontal shaft. Near its outer end the connecting rod 102 is included in the slotted hole 85 of the console 103 so as to be movable therein about a horizontal pivot shaft. According to a non-shown embodiment, the adjusting element 106 may be replaced by a connecting rod which, near its inner end, is connected via a horizontal pivot shaft with the adjusting element 102 and an arm which is pivotably connected about a horizontal shaft with the intermediate arms 94. The running wheels 39 of the working members 14 of the central group are furthermore disposed so as to be pivotable about a substantially vertical shaft.

The function of the hay-making machine corresponds to that of the first embodiment. In the operative position the machine functions as a tedder.

The working members 14, 29 and 30 of all three groups are arranged in such a manner that the crop is treated on a continuous strip of soil. This implies that, seen in the direction of travel A, the working member 29 located on the inside, pertaining to an outer group of working members 28, is overlapping the working members 14 located on the outside, pertaining to the central group. This overlap is larger than the overlap of the working members within each group. The working members are capable of adapting themselves to the unevennesses of the ground because the frame portions carrying working members are able to move relative to the frame 50 about the various horizontal pivot shafts.

When the machine has to be adjusted into the transport position, first the trestle 53 is pivoted rearwards about the horizontal shafts 56 by means of the hydraulic cylinder 60, i.e. in such a manner that the arms 55 have obtained a vertical position, or that the pivot shafts between the frame portions of the frame beams 80 and 15 have been arranged at least substantially horizontally. Then, by an upward pivotal movement of the outer frame beams 97 about the shafts 96 and subsequently of the intermediate arm 94 about the shaft 95, the outer working members 30 are positioned above the working members 29. Subsequently the frame beams 80 are pivoted forwardly beside the frame 50 about the vertical shafts 81 by means of the hydraulic cylinders 89. Afterwards the outer two working members of the central group 22 can be pivoted.

In Figure 12 is shown in further detail how the frame beam 32 capable of being folded up on the frame beam 31 and the frame beam 31 (see Figure 3) are pivotably fixed to each other by means of an intermediate arm 33. Said pivotal construction is not only suitable for a hay-making machine but also for e.g. a weeder harrow so that this construction may constitute part of an agricultural machine. The application to a hay-making machine is a particular one because, in that case, on the frame arms there are mounted tines performing a relatively quick circular movement, which tines render the structure complex. In the vicinity of its respective ends, the intermediate arm 34 carries the pivot shafts 111 which, in the operative position of the agricultural machine, extend substantially horizontally and parallel to the direction of travel. Because, in the embodiment described, the drive shafts 112 pass through the frame beams and the intermediate arms, there is provided a universal joint 113 at each pivot shaft 111 so that, notwithstanding the folded up position of the frame beam 32, the drive of all working members 30 is guaranteed. The frame beams 31 and 32 each carry two working members 29, 30. This number may optionally be different. By means of the adjusting element 35, preferably constituted by a hydraulic piston/cylinder combination, the upward pivotal movement of the intermediate arm 33 relative to the frame arm 31 and the upward pivotal movement of the frame arm 32 relative to the intermediate arm 33 are controlled. The one end of the adjusting element 35 is mounted pivotably on the frame beam 31 and the other end thereof is mounted pivotably on the frame beam 32. The place where the adjusting element 35 is mounted is each time relatively close to the pivot shafts 111 of the frame beam 31 and the frame beam 32 respectively. Near its pivot shaft 111 the frame beam 31 carries a stop means 114 including two stops 115, 116 which mutually include an angle of substantially 90° and limit the pivotal movement about each pivot shaft 111 to substantially 90°. In the folded up position of the frame beam 32 shown in Figure 11, the stop 115 is faced away from the frame beam 32 and the stop 116 is facing the adjusting element 35. As appears in particular from Figure 12, in the completely folded up position of the frame beam 32 the stop 116 will rest against the intermediate arm 110 and the stop 115 will rest against the frame beam 31. Consequently, relative to the adjusting element 35, the stop means 114 pivots about the pivot shafts 111 through an angle of totally approximately 180°. Instead of a pivotal movement in upward direction about substantially horizontal pivot shafts 111, a pivotal movement in forward or rearward direction, relative to the direction of travel of the machine, about upwardly orientated pivot shafts 111 will be possible as well.

The intermediate arm 33 does not carry any working member such as a tedder or rake rotor. Said arm may carry a working member, if desired, but preferably it does not carry a working member of the type intended for the relevant agricultural machine. By "the type intended for the relevant agricultural machine" there is meant here that for e.g. a tedder there is not provided e.g. a tedder member (i.e. a rotor rotating about an upwardly extending shaft, which rotor includes tedder tines arranged in a circle), but that an other working member, such as a fixed resilient tine of a weeder harrow, may be fastened thereto.

In this manner it is possible entirely to fold up one frame beam 32 on the other frame beam 31 so that, in the folded up position, said frame beams extend substantially parallel. By "folding up" is meant in this case that the longitudinal sides of two adjacent frame beams will be brought into a position in which they are facing each other, which is already realized at an angle of pivoting of e.g. 110° from the position in which said frame beams are in line, although preference is given to an angle of pivoting of at least approximately 160°.

## Claims

1. A hay-making machine comprising a number of motor-driven working members (14, 29, 30) rotating about upwardly orientated shafts, which working members are divided into three groups that are arranged in rows extending transversely to the direction of travel of the machine, of which three groups two outer ones, viewed in the direction of travel of the machine, are located at the side of a third group and at some distance therefrom, said machine including a frame (1) on which the three groups of working members (14, 29, 30) are mounted and the machine being capable of being adjusted into a transport position wherein at least one working member of an outer group (28) is pivotable in height, relative to at least one other working member of said group (28), about a shaft extending at least substantially in the direction of travel, characterized in that of said three groups the outer one comprise more than three working members and in that, viewed in the direction of travel, the whole group (28) is pivotable in forward direction about a vertical shaft (81) in such a manner that the width of the machine is reduced.

2. A hay-making machine as claimed in claim 1, which hay-making machine includes a frame (1) carrying the working members, characterized in that each of the outer groups of working members (28) is pivotable about an upwardly orientated shaft located at the side of the groups of working members (28) facing the frame (1).

3. A hay-making machine as claimed in claim 1 or 2, characterized in that, between two juxtaposed working members (29) of the outer group of working members (28) there is disposed a connecting element which, by means of at least substantially horizontal shafts, is coupled to each part of the outer group of working members.

4. A hay-making machine as claimed in claim 3, characterized in that, by means of said connecting element, the working member(s) located on the outside can be positioned over the other working members of the group.

5. A hay-making machine as claimed in any one of the preceding claims, characterized in that both the outer group (28) and the group located in the middle comprise a corresponding unit of three working members of which the outer working member is pivotable in upward direction.

6. A hay-making machine as claimed in claim 3, characterized in that the unit of three working members has an own gearbox whose drive is capable of being coupled to that of the other working member(s) of the pertaining group.

7. A hay-making machine as claimed in any one of the preceding claims, characterized in that, viewed in the direction of travel, two centrally located working members of the third group located in the middle are capable of rotating in forward direction near their sides facing each other in the direction of travel during operation.

8. A hay-making machine as claimed in any one of the preceding claims, characterized in that during operation the working members are rotating alternately in opposite directions, while the working members of outer groups located at the side of the group located in the middle are rotating in opposite direction relative to the outer working members of the inner group, the arrangement being such that the machine functions as a tedder.

9. A hay-making machine as claimed in any one of the preceding claims, characterized in that the two outer groups of working members (28), viewed in the direction of travel A, are in a more advanced position relative to the central third group.

10. A hay-making machine as claimed in any one of the preceding claims, characterized in that the machine includes a frame supported by supporting wheels (62), at the rear side of which frame the central group of working members (22) is disposed and at whose sides being, viewed in the direction of travel, the lateral ones there is disposed a group of working members (28).

11. A hay-making machine as claimed in any one of the preceding claims, characterized in that the axes of rotation of the supporting wheels, seen from above, coincide at least substantially with a line transversely to the direction of travel, which line is intersected by the axes of rotation of the outer group of working members.

12. A hay-making machine as claimed in claim 10 or 11, characterized in that the supporting wheels are adjustable in height in such a manner that the working members of all groups are lifted from the ground in the transport position.

13. A hay-making machine as claimed in any one of the preceding claims, characterized in that the frame has an upright trestle, the central group of working members being disposed thereon.

14. A hay-making machine as claimed in claim 13, characterized in that the group of working members located in the middle is connected with the trestle by means of coupling elements pivoting about pivot shafts extending transversely to the direction of travel.

15. A hay-making machine as claimed in claim 13 or 14, characterized in that the trestle is located at least substantially on the line extending transversely to the direction of travel of the machine, on which line the axes of rotation of the working members of the outer groups are located, or near thereto.

16. A hay-making machine as claimed in any one of claims 13 to 15, characterized in that the trestle on the frame, in a rear view, leaves a free space between the upper side of the trestle and the frame.

17. A hay-making machine as claimed in any one of claims 13 to 16, characterized in that the group of working members located in the middle is adjustable in height relative to the trestle, preferably by means of a hydraulic cylinder.

18. A hay-making machine as claimed in any one of the preceding claims, characterized in that the outer groups of working members are each pivotable in height relative to the frame about a pivot shaft, preferably by means of a hydraulic cylinder.

19. A hay-making machine as claimed in any one of the preceding claims, characterized in that the pivotal axis for the adjustment in height of the working members of each outer group and the upwardly orientated pivotal axis, by the forward pivotal movement of each of the outer groups, intersect each other or are at least located in the vicinity of each other.

20. A hay-making machine as claimed in any one of the preceding claims, characterized in that the supporting wheels are adjustable in height.

21. A hay-making machine as claimed in any one of the preceding claims, characterized in that each of the groups of working members is provided with a separate drive, each of these drives being provided with an overload clutch.

22. A hay-making machine as claimed in any one of claims 13 to 20, characterized in that on the frame under the open trestle there is disposed a gearbox for the drive of the working members, which gearbox is capable of being coupled with the power take-off shaft of a tractor by which the hay-making machine is moved forwards.

23. A hay-making machine as claimed in claim 22, characterized in that the gearbox includes a connection for an ingoing shaft and furthermore three outgoing shafts, two of which extending transversely to the direction of travel and being adapted to be coupled to a drive for the groups of working members located on the outside, and additionally an outgoing shaft extending in rearward direction, the latter shaft being adapted to be coupled with a drive for the working members located in the middle.

24. A hay-making machine as claimed in claim 22, characterized in that each of the three outgoing shafts is provided with an overload clutch.

25. A hay-making machine as claimed in any one of the preceding claims, characterized in that each of the working members is supported by at least one own running wheel.

26. A hay-making machine as claimed in any one of claims 10 to 23, characterized in that the supporting wheels of the frame are designed as running wheels fixed in the direction of travel.

27. A hay-making machine as claimed in claim 24 or 26, characterized in that the running wheels under the working members are selfadjusting running ones.

28. A hay-making machine as claimed in any one of the preceding claims, characterized in that the working width of the machine amounts to at least 12 m and the transport width of the machine amounts to at the most 3 m.

29. A hay-making machine, in particular as claimed in any one of the preceding claims, characterized in that each of the groups of working members located at the sides of the machine is pivotable in upward direction about a pivot shaft extending transversely to the direction of travel, which pivot shaft includes an upwardly orientated angle with a horizontal line.

## Patentansprüche

1. Heuwerbungsmaschine mit mehreren motorisch angetriebenen Bearbeitungsgliedern (14, 29, 30), die sich um aufwärts gerichtete Achsen drehen, wobei die Bearbeitungsglieder in drei Gruppen unterteilt sind, die in sich quer zur Arbeitsrichtung der Maschine erstreckenden Reihen angeordnet sind, wobei von den drei Gruppen zwei äußere Gruppen in bezug auf die Arbeitsrichtung der Maschine seitlich von einer dritten Gruppe und in einigem Abstand von dieser angeordnet sind, wobei die Maschine einen Rahmen (1) enthält, an dem die drei Gruppen von Bearbeitungsgliedern (14, 29, 30) angebracht sind, und die Maschine in eine Transportlage einstellbar ist, in der mindestens ein Bearbeitungsglied einer äußeren Gruppe (28) relativ zu mindestens einem anderen Bearbeitungsglied der Gruppe (28) um eine sich zumindest im wesentlichen in Arbeitsrichtung erstreckende Achse höhenverschwenkbar ist,
dadurch gekennzeichnet, daß von den drei Gruppen die äußere Gruppe mehr als drei Bearbeitungsglieder umfaßt, und daß in Arbeitsrichtung betrachtet die ganze Gruppe (28) um eine vertikale Achse (81) derart nach vorn geschwenkt werden kann, daß die Breite der Maschine verringert wird.

2. Heuwerbungsmaschine nach Anspruch 1, wobei die Heuwerbungsmaschine einen die Bearbeitungsglieder tragenden Rahmen (1) enthält,
dadurch gekennzeichnet, daß jede der äußeren Gruppen (28) von Bearbeitungsgliedern um eine aufwärts gerichtete Achse schwenkbar ist, die auf der Seite der Gruppen (28) von Bearbeitungsgliedern liegt, die dem Rahmen (1) zugewandt ist.

3. Heuwerbungsmaschine nach Anspruch 1 oder 2,
dadurch gekennzeichnet, daß zwischen zwei nebeneinanderliegenden Bearbeitungsgliedern (29) der äußeren Gruppe (28) von Bearbeitungsgliedern ein Verbindungselement angeordnet ist, das mittels zumindest im wesentlichen horizontaler Achsen mit jedem Teil der äußeren Gruppe von Bearbeitungsgliedern verbunden ist.

4. Heuwerbungsmaschine nach Anspruch 3,
dadurch gekennzeichnet, daß mittels des Verbindungselementes das bzw. die an der Außenseite angeordneten Bearbeitungsglieder über den anderen Bearbeitungsgliedern der Gruppe positioniert werden können.

5. Heuwerbungsmaschine nach einem der vorhergehenden Ansprüche,
dadurch gekennzeichnet, daß sowohl die äußere Gruppe (28) als auch die in der Mitte liegende Gruppe eine entsprechende Einheit von drei Bearbeitungsgliedern umfaßt, von denen das äußere Bearbeitungsglied nach oben geschwenkt werden kann.

6. Heuwerbungsmaschine nach Anspruch 3,
dadurch gekennzeichnet, daß die Einheit von drei Bearbeitungsgliedern ein eigenes Getriebe aufweist, dessen Antrieb mit dem des bzw. der anderen Bearbeitungsglieder der entsprechenden Gruppe gekoppelt werden kann.

7. Heuwerbungsmaschine nach einem der vorhergehenden Ansprüche,
dadurch gekennzeichnet, daß sich in Arbeitsrichtung betrachtet zwei mittig angeordnete Bearbeitungsglieder der in der Mitte liegenden dritten Gruppe im Betrieb nahe ihren einander zugewandten Seiten in Arbeitsrichtung nach vorn drehen können.

8. Heuwerbungsmaschine nach einem der vorhergehenden Ansprüche,
dadurch gekennzeichnet, daß sich die Bearbeitungsglieder im Betrieb abwechselnd in entgegengesetzte Richtungen drehen, wobei sich die Bearbeitungsglieder der äußeren Gruppen, die seitlich von der in der Mitte liegenden Gruppe angeordnet sind, relativ zu den äußeren Bearbeitungsgliedern der inneren Gruppe in entgegengesetzter Richtung drehen, wobei die Anordnung so getroffen ist, daß die Maschine als Zetter arbeitet.

9. Heuwerbungsmaschine nach einem der vorhergehenden Ansprüche,
dadurch gekennzeichnet, daß die beiden äußeren Gruppen (28) von Bearbeitungsgliedern in Arbeitsrichtung A betrachtet relativ zu der mittleren dritten Gruppe weiter vorn angeordnet sind.

10. Heuwerbungsmaschine nach einem der vorhergehenden Ansprüche,
dadurch gekennzeichnet, daß die Maschine einen von Stützrädern (62) abgestützten Rahmen aufweist, an dessen Rückseite die mittlere Gruppe (22) von Bearbeitungsgliedern angeordnet ist, und an dessen Seiten, die in Arbeitsrichtung betrachtet die seitlichen sind, eine Gruppe (28) von Bearbeitungsgliedern angeordnet ist.

11. Heuwerbungsmaschine nach einem der vorhergehenden Ansprüche,
dadurch gekennzeichnet, daß die Drehachsen der Stützräder in der Draufsicht zumindest im wesentlichen mit einer quer zur Arbeitsrichtung verlaufenden Linie zusammenfallen, die von den Drehachsen der äußeren Gruppe von Bearbeitungsgliedern geschnitten wird.

12. Heuwerbungsmaschine nach Anspruch 10 oder 11,
dadurch gekennzeichnet, daß die Stützräder derart höhenverstellbar sind, daß die Bearbeitungsglieder aller Gruppen in der Transportlage angehoben werden.

13. Heuwerbungsmaschine nach einem der vorhergehenden Ansprüche,
dadurch gekennzeichnet, daß der Rahmen einen aufrechten Anbaubock aufweist, an dem die mittlere Gruppe von Bearbeitungsgliedern angeordnet ist.

14. Heuwerbungsmaschine nach Anspruch 13,
dadurch gekennzeichnet, daß die in der Mitte liegende Gruppe von Bearbeitungsgliedern mit dem Anbaubock durch Verbindungselemente verbunden ist, die sich um quer zur Arbeitsrichtung angeordnete Drehachsen drehen.

15. Heuwerbungsmaschine nach Anspruch 13 oder 14,
dadurch gekennzeichnet, daß der Anbaubock zumindest im wesentlichen auf oder nahe der sich quer zur Arbeitsrichtung der Maschine erstreckenden Linie liegt, auf der die Drehachsen der Bearbeitungsglieder der äußeren Gruppen liegen.

16. Heuwerbungsmaschine nach einem der Ansprüche 13 bis 15,
dadurch gekennzeichnet, daß der Anbaubock an dem Rahmen in Rückansicht einen freien Raum zwischen der Oberseite des Anbaubockes und dem Rahmen beläßt.

17. Heuwerbungsmaschine nach einem der Ansprüche 13 bis 16,
dadurch gekennzeichnet, daß die in der Mitte liegende Gruppe von Bearbeitungsgliedern relativ zu dem Anbaubock höhenverstellbar ist, vorzugsweise mittels eines Hydraulikzylinders.

18. Heuwerbungsmaschine nach einem der vorhergehenden Ansprüche,
dadurch gekennzeichnet, daß die äußeren Gruppen von Bearbeitungsgliedern jeweils relativ zu dem Rahmen um eine Schwenkachse höhenverschwenkbar sind, vorzugsweise mittels eines Hydraulikzylinders.

19. Heuwerbungsmaschine nach einem der vorhergehenden Ansprüche,
dadurch gekennzeichnet, daß die Schwenkachse zum Hochschwenken der Bearbeitungsglieder jeder äußeren Gruppe und die aufwärts gerichtete Schwenkachse durch die Schwenkbewegung jeder der äußeren Gruppen nach vorn einander kreuzen oder zumindest nahe beieinanderliegen.

20. Heuwerbungsmaschine nach einem der vorhergehenden Ansprüche,
dadurch gekennzeichnet, daß die Stützräder höhenverstellbar sind.

21. Heuwerbungsmaschine nach einem der vorhergehenden Ansprüche,
dadurch gekennzeichnet, daß jede der Gruppen von Bearbeitungsgliedern mit einem getrennten Antrieb versehen ist, wobei jeder dieser Antriebe eine Überlastkupplung aufweist.

22. Heuwerbungsmaschine nach einem der Ansprüche 13 bis 20,
dadurch gekennzeichnet, daß an dem Rahmen unter dem offenen Anbaubock ein Getriebe zum Antreiben der Bearbeitungsglieder angeordnet ist, wobei das Getriebe mit der Zapfwelle eines Schleppers verbunden werden kann, von dem die Heuwerbungsmaschine vorwärtsbewegt wird.

23. Heuwerbungsmaschine nach Anspruch 22,
dadurch gekennzeichnet, daß das Getriebe einen Anschluß für eine Eingangswelle und ferner drei Ausgangswellen aufweist, von denen sich zwei quer zur Arbeitsrichtung erstrecken und zur Verbindung mit einem Antrieb für die auf der Außenseite liegenden Gruppen von Bearbeitungsgliedern ausgebildet sind, und zusätzlich eine sich nach hinten erstreckende Ausgangswelle aufweist, die mit einem Antrieb für die in der Mitte liegenden Bearbeitungsglieder zu verbinden ist.

24. Heuwerbungsmaschine nach Anspruch 22,
dadurch gekennzeichnet, daß jede der drei Ausgangswellen mit einer Überlastkupplung versehen ist.

25. Heuwerbungsmaschine nach einem der vorhergehenden Ansprüche,
dadurch gekennzeichnet, daß jedes der Bearbeitungsglieder durch mindestens ein eigenes Laufrad abgestützt ist.

26. Heuwerbungsmaschine nach einem der Ansprüche 10 bis 23,
dadurch gekennzeichnet, daß die Stützräder des Rahmens als in Arbeitsrichtung angebrachte Laufräder ausgeführt sind.

27. Heuwerbungsmaschine nach Anspruch 24 oder 26,
dadurch gekennzeichnet, daß die Laufräder unter den Bearbeitungsgliedern selbsteinstellende Laufräder sind.

28. Heuwerbungsmaschine nach einem der vorhergehenden Ansprüche,
dadurch gekennzeichnet, daß die Arbeitsbreite der Maschine mindestens 12 m und die Transportbreite der Maschine höchstens 3 m beträgt.

29. Heuwerbungsmaschine, insbesondere nach einem der vorhergehenden Ansprüche,
dadurch gekennzeichnet, daß jede der auf den Seiten der Maschine angeordneten Gruppen von Bearbeitungsgliedern um eine sich quer zur Arbeitsrichtung erstreckende Schwenkachse nach oben geschwenkt werden kann, wobei die Schwenkachse einen aufwärts gerichteten Winkel mit einer Horizontalen einschließt.

## Revendications

1. Machine de fenaison comportant plusieurs organes de travail entraînés par un moteur (14, 29, 30) qui tournent autour d'arbres orientés vers le haut, organes de travail qui sont divisés en trois groupes qui sont disposés en rangées s'étendant transversalement à la direction de déplacement de la machine, deux groupes extérieurs parmi les trois groupes, vus dans la direction de déplacement de la machine, étant sur le côté d'un troisième groupe et à une certaine distance de celui-ci, ladite machine comportant un châssis (1) sur lequel sont montés les trois groupes d'organes de travail (14, 29, 30), et la machine pouvant être ajustée dans une position de transport dans laquelle au moins un organe de travail d'un groupe extérieur (28) peut pivoter en hauteur, par rapport à au moins un autre organe de travail dudit groupe (28), autour d'un arbre s'étendant au moins sensiblement dans la direction de déplacement, caractérisée en ce que parmi lesdits trois groupes, le groupe extérieur comporte plus de trois organes de travail et en ce que, vu dans la direction de déplacement, le groupe entier (28) peut pivoter vers l'avant autour d'un arbre vertical (81) d'une manière telle que la largeur de la machine est réduite.

2. Machine de fenaison selon la revendication 1, qui comporte un châssis (1) portant les organes de travail, caractérisée en ce que chacun des groupes extérieurs des organes de travail (28) peut pivoter autour d'un arbre orienté vers le haut situé sur le côté des groupes d'organes de travail (28) faisant face au châssis (1).

3. Machine de fenaison selon la revendication 1 ou 2, caractérisée en ce que, entre deux organes de travail juxtaposés (29) du groupe extérieur d'organes de travail (28), est disposé un élément de connexion qui, par l'intermédiaire d'arbres au moins sensiblement horizontaux, est accouplé à chaque partie du groupe extérieur d'organes de travail.

4. Machine de fenaison selon la revendication 3, caractérisée en ce que, par l'intermédiaire dudit élément de connexion, l'organe ou les organes de travail positionnés à l'extérieur peuvent être positionnés sur les autres organes de travail du groupe.

5. Machine de fenaison selon l'une quelconque des revendications précédentes, caractérisée en ce que le groupe extérieur (28) et le groupe situé au milieu comportent tous deux une unité correspondante de trois organes de travail dont l'organe de travail extérieur peut pivoter vers le haut.

6. Machine de fenaison selon la revendication 3, caractérisée en ce que l'unité de trois organes de travail a sa propre boîte d'engrenages dont l'entraînement peut être accouplé à celui de l'autre ou des autres organes de travail du groupe auquel elle appartient.

7. Machine de fenaison selon l'une quelconque des revendications précédentes, caractérisée en ce que, vus dans la direction de déplacement, deux organes de travail positionnés au centre du troisième groupe situé au milieu peuvent tourner vers l'avant à proximité de leurs côtés se faisant face l'un et l'autre dans la direction de déplacement en fonctionnement.

8. Machine de fenaison selon l'une quelconque des revendications précédentes, caractérisée en ce que, en fonctionnement, les organes de travail tournent de manière alternée dans des directions opposées, tandis que les organes de travail des groupes extérieurs situés sur le côté du groupe situé au milieu tournent dans une direction opposée par rapport aux organes de travail extérieurs du groupe intérieur, la disposition étant telle que la machine fonctionne comme une faneuse.

9. Machine de fenaison selon l'une quelconque des revendications précédentes, caractérisée en ce que les deux groupes extérieurs d'organes de travail (28), vus dans la direction de déplacement A, sont dans une position plus avancée par rapport au troisième groupe central.

10. Machine de fenaison selon l'une quelconque des revendications précédentes, caractérisée en ce que la machine comporte un châssis supporté par des roues de support (62), au niveau du côté arrière duquel le groupe central d'organes de travail (22) est disposé, et au niveau de ses côtés qui sont, vus dans la direction de déplacement, les côtés latéraux est disposé un groupe d'organes de travail (28).

11. Machine de fenaison selon l'une quelconque des revendications précédentes, caractérisée en ce que les axes de rotation des roues de support, vus de dessus, coïncident au moins sensiblement avec une ligne transversale à la direction de déplacement, ligne qui est croisée par les axes de rotation du groupe extérieur d'organes de travail.

12. Machine de fenaison selon la revendication 10 ou 11, caractérisée en ce que les roues de support peuvent être ajustées en hauteur d'une manière telle que les organes de travail de tous les groupes sont levés au-dessus du sol dans la position de transport.

13. Machine de fenaison selon l'une quelconque des revendications précédentes, caractérisée en ce que le châssis a un bâti vertical, le groupe central d'organes de travail étant disposé sur celui-ci.

14. Machine de fenaison selon la revendication 13, caractérisée en ce que le groupe d'organes de travail situé au milieu est connecté au bâti par l'intermédiaire d'éléments d'accouplement pivotant autour d'arbres de pivotement s'étendant transversalement à la direction de déplacement.

15. Machine de fenaison selon la revendication 13 ou 14, caractérisée en ce que le bâti est situé au moins sensiblement sur la ligne s'étendant transversalement à la direction de déplacement de la machine, ligne sur laquelle sont situés les axes de rotation des organes de travail des groupes extérieurs, ou à proximité de celle-ci.

16. Machine de fenaison selon l'une quelconque des revendications 13 à 15, caractérisée en ce que le bâti situé sur le châssis, en vue arrière, laisse un espace libre entre le côté supérieur du bâti et le châssis.

17. Machine de fenaison selon l'une quelconque des revendications 13 à 16, caractérisée en ce que le groupe d'organes de travail situé au milieu peut être ajusté en hauteur par rapport au bâti, de préférence par l'intermédiaire d'un vérin hydraulique.

18. Machine de fenaison selon l'une quelconque des revendications précédentes, caractérisée en ce que les groupes extérieurs d'organes de travail peuvent chacun pivoter en hauteur par rapport au châssis autour d'un arbre de pivotement, de préférence par l'intermédiaire d'un vérin hydraulique.

19. Machine de fenaison selon l'une quelconque des revendications précédentes, caractérisée en ce que l'axe de pivotement destiné à l'ajustement en hauteur des organes de travail de chaque groupe extérieur et l'axe de pivotement orienté vers le haut, par le mouvement de pivotement vers l'avant de chacun des groupes extérieurs, se croisent l'un l'autre, ou sont au moins situés à proximité l'un de l'autre.

20. Machine de fenaison selon l'une quelconque des revendications précédentes, caractérisée en ce que les roues de support peuvent être ajustées en hauteur.

21. Machine de fenaison selon l'une quelconque des revendications précédentes, caractérisée en ce que chacun des groupes d'organes de travail est muni d'un entraînement séparé, chacun de ces entraînements étant muni d'un accouplement de surcharge.

22. Machine de fenaison selon l'une quelconque des revendications 13 à 20, caractérisée en ce que sur le châssis sous le bâti ouvert est disposée une boîte d'engrenages destinée à l'entraînement des organes de travail, boîte d'engrenages qui peut être accouplée à l'arbre de prise de force d'un tracteur par l'intermédiaire duquel la machine de fenaison est déplacée vers l'avant.

23. Machine de fenaison selon la revendication 22, caractérisée en ce que la boîte d'engrenages comporte une connexion destinée à un arbre d'entrée et de plus trois arbres de sortie, dont deux s'étendent transversalement à la direction de déplacement et qui sont adaptés pour être accouplés à un entraînement destiné aux groupes d'organes de travail situés à l'extérieur, et de plus un arbre de sortie s'étendant vers l'arrière, ce dernier arbre étant adapté pour être accouplé avec un entraînement destiné aux organes de travail situés au milieu.

24. Machine de fenaison selon la revendication 22, caractérisée en ce que chacun des trois arbres de sortie est muni d'un accouplement de surcharge.

25. Machine de fenaison selon l'une quelconque des revendications précédentes, caractérisée en ce que chacun des organes de travail est supporté par au moins sa propre roue de roulement.

26. Machine de fenaison selon l'une quelconque des revendications 10 à 23, caractérisée en ce que les roues de support du châssis sont conçues sous forme de roues de roulement fixées dans la direction de déplacement.

27. Machine de fenaison selon la revendication 24 ou 26, caractérisée en ce que les roues de roulement situées sous les organes de travail sont des roues à auto-ajustement.

28. Machine de fenaison selon l'une quelconque des revendications précédentes, caractérisée en ce que la largeur de travail de la machine équivaut au moins à 12 m, et la largeur de transport de la machine équivaut au plus à 3 m.

29. Machine de fenaison selon l'une quelconque des revendications précédentes, caractérisée en ce que chacun des groupes d'organes de travail positionnés au niveau des côtés de la machine peut pivoter vers le haut autour d'un arbre de pivotement s'étendant transversalement à la direction de déplacement, arbre de pivotement qui délimite un angle orienté vers le haut avec une ligne horizontale.
